# EUROPÄISCHE PATENTSCHRIFT

(11) **EP 0 913 021 B1**
(45) Veröffentlichungstag und Bekanntmachung des Hinweises auf die Patenterteilung: **15.03.2000**
(21) Anmeldenummer: 97933663.3
(22) Anmeldetag: 11.07.1997
(51) Int. Cl.: H02J 13/00

(54) **BUSANKOPPLER ZUM ÜBERTRAGERFREIEN SENDEN**
BUS COUPLER WITH TRANSFORMER-FREE TRANSMISSION
COUPLEUR DE BUS POUR EMISSION SANS TRANSLATEUR

(30) Priorität: 17.07.1996 EP 96111538
(43) Veröffentlichungstag der Anmeldung: 06.05.1999
(73) Patentinhaber: SIEMENS AKTIENGESELLSCHAFT, 80333 München (DE)
(72) Erfinder: ZIERHUT, Hermann, / (DE)
(86) Internationale Anmeldenummer: EP9703702
(87) Internationale Veröffentlichungsnummer: WO9804027

(56) Entgegenhaltungen:
- EP-A- 0 007 622
- DE-A- 2 903 860
- HAPPACHER M: "DAS VERNETZTE EIGENHEIM" ELEKTRONIK, Bd. 44, Nr. 18, 5.September 1995, Seiten 50-54, 56, 58, XP000529579

## Beschreibung

Die Erfindung bezieht sich auf einen Busankoppler zum übertragerfreien Senden auf einen Information und Energie führenden Bus, im einzelnen nach Gattungsbegriff von Anspruch 1. Die Information wird hierbei als Aktivimpuls und aus Gründen des Buswirkungsgrades als Ausgleichsimpuls je Bit/Information aufgebaut. Ein derartiger Bus der Gebäudesystemtechnik wird insbesondere von der European Installation Bus Association, EIBA, eingesetzt (beispielsweise EP-A-0 365 696).

Um die Integration der Bauteile eines Busankopplers weiterzuführen und um möglichst alle Bauteile in einem IC realisieren zu können, möchte man ohne die bewährten Übertrager auskommen.

Der Erfindung liegt die Aufgabe zugrunde, einen Busankoppler zu entwickeln, der zum Senden von Aktivimpuls und Ausgleichsimpuls mit einer entsprechend einfachen Schaltungsanordnung auskommt.

Die Lösung der geschilderten Aufgabe erfolgt durch einen Busankoppler nach Anspruch 1. Das Sendeventil eines Sendesignalgebers ist der Wirkung nach über eine Kapazität an einen Busleiter angeschlossen, die klein sein kann bezüglich einer gedachten Kapazität, die für die Aktivimpulse der Information als Kurzschluß wirkt. Hierbei dient eine Miller-Schaltung in Verbindung mit zwei Stromverstärkerschaltungen dazu, die kleine Kapazität in eine ausreichend große Kapazität zu transformieren. Bei einer derartigen transformierten ausreichend großen Kapazität werden die Aktivimpulse ausreichend verlustfrei übertragen. Die Größe der Kapazität kann man also nach den jeweiligen Anforderungen ausrichten. Zur Generierung des Ausgleichsimpulses bedient man sich einer Energiespeicherung in einer weiteren Kapazität. Aktivimpuls und Ausgleichsimpuls werden mittels Kapazitäten generiert, die im Vergleich zu einer Ankopplung durch Übertrager wenig Raum einnehmen und die sich in einen integrierten Schaltkreis, IC, leicht realisieren lassen. Durch die zwei Verstärkerschaltungen kann in der Praxis je Stufe eine Verstärkung um einen Faktor 10 erzielt werden, so daß insgesamt sich eine Verstärkung in der Größenordnung von 1000 ergibt. Wesentlich ist hierbei auch, daß durch die zwei Verstärkerschaltungen eine phasengerechte Verstärkung erzielt wird.

Ein Kondensator (3) für die kleine Kapazität kann mit einem Pol an einen Busleiter eines zweiadrigen Busses angeschlossen sein und mit seinem anderen Pol über einen hochohmigen Widerstand an eine Spannungsquelle angeschlossen sein, wobei die Spannungsquelle so gewählt werden kann, daß ihre Spannung die gewünschte Spannung des Aktivimpulses erzeugt. Die Miller-Schaltung kann zusammen mit ihren Verstärkerschaltungen über das Sendeventil des Sendesignalgebers gegen Masse geschaltet sein. Hierbei kann ein Busleiter positives Signal und ein Busleiter negatives Signal führen und die Masse kann hierzu sozusagen frei schwebend angeordnet sein.

Ein weiterer Kondensator (8) für die weitere Kapazität zur Erzeugung des Ausgleichsimpulses kann mit seinem einen Pol an einem Busleiter und mit seinem anderen Pol an der Spannungsquelle angeschlossen sein, wobei Ladung und Entladung des weiteren Kondensators über der Impulsform der Information entsprechend angesteuerte Netzwerke und entsprechenden Zeitkonstanten gesteuert sein können. Hierdurch erzielt man eine besonders einfache Gesamtschaltung. Es ist vorteilhaft, daß der Kondensator für die kleine Kapazität und der weitere Kondensator am Busleiter positiver Polarität angeschlossen sind.

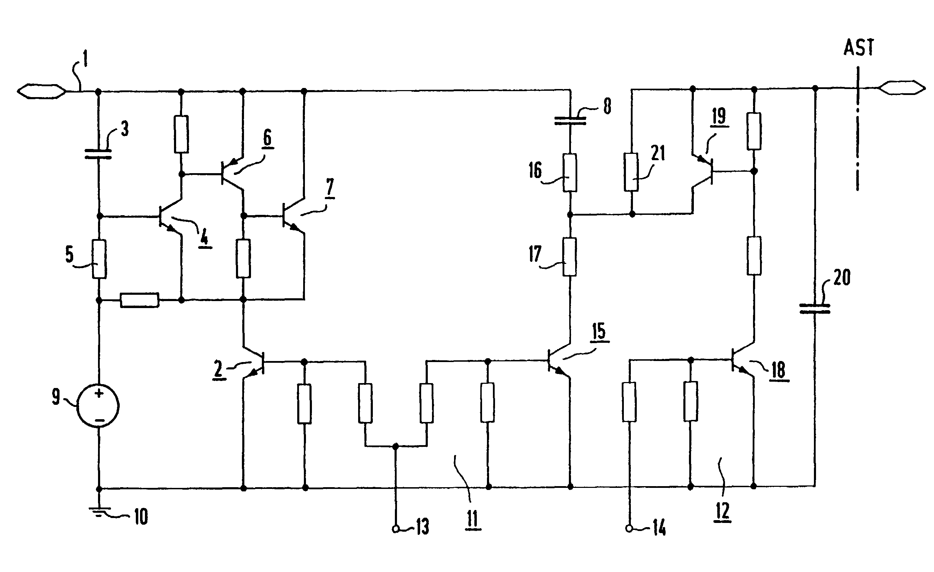

Die Erfindung soll nun anhand eines in der Zeichnung grob schematisch wiedergegebenen Ausführungsbeispiels näher erläutert werden:

Der Busankoppler nach der Zeichnung dient zum übertragerfreien Senden auf einen Bus, der Information und Energie führt, wobei die Information aus Aktivimpulsen und Ausgleichsimpulsen zusammengesetzt ist. Der Busankoppler ist im Ausführungsbeispiel an einem Busleiter 1 angeschlossen. Das Sendeventil 2 eines Sendesignalgebers ist der Wirkung nach über eine Kapazität 3 an zumindest einem Busleiter 1 angeschlossen. Die Kapazität 3 ist klein bezüglich einer gedachten Kapazität, die für die Aktivimpulse der Information als Kurzschluß wirken kann. Die kleine Kapazität 3 wird in einer Miller-Schaltung, der Wirkung nach im wesentlichen bestehend aus dieser kleinen Kapazität 3 sowie aus einem Transistor 4 und einem Ansteuerwiderstand 5 und durch zwei Stromverstärkerschaltungen mit dem Transistor 6 bzw. mit dem Transistor 7 in eine ausreichend große Kapazität transformiert. Die Kapazität ist ausreichend groß, wenn sie ermöglicht, Aktivimpulse ausreichend verlustfrei zu übertragen. Eine Energiespeicherung zur Generierung des Ausgleichsimpulses erfolgt in einer weiteren Kapazität 8.

Im Ausführungsbeispiel ist ein Kondensator für die kleine Kapazität 3 mit einem Pol an einem.Busleiter 1 eines zweiadrigen Busses angeschlossen und mit seinem anderen Pol über einen hochohmigen Widerstand 5, der als Ansteuerwiderstand dient, an eine Spannungsquelle 9. Die Spannungsquelle 9 ist so gewählt, daß ihre Spannung die gewünschte Spannung des Aktivimpulses erzeugt.

Die Miller-Schaltung mit dem Transistor 4 ist zusammen mit ihren Verstärkerschaltungen mit den Transistoren 6 und 7, über das Sendeventil 2 des Sendesignalgebers gegen Masse 10 geschaltet. Ein weiterer Kondensator für die weitere Kapazität 8 zur Erzeugung des Ausgleichsimpulses ist mit seinem einen Pol über den Ladewiderstand 16 und den parallel zum Transistor 19 geschalteten Widerstand 21 an einem Busleiter 1 angeschlossen. Mit seinem anderen Pol ist der weitere Kondensator an der Kapazität 20 als Spannungsquelle für die Bordnetzverzögerung angeschlossen. Ladung und Entladung des weiteren Kondensators mit der weiteren Kapazität 8 erfolgt über angesteuerte Netzwerke 11,12, die über die Steuereingänge 13 und 14 so angesteuert sind, daß bei entsprechenden Zeitkonstanten die Impulsform der Information abgebildet wird. So kann das Netzwerk 11 über eine Zeitdauer von t0 bis t1 die weitere Kapazität aufladen und einen Impuls bilden und das Netzwerk 12 über eine Zeitdauer von tl bis t2 einen Ausgleichsimpuls bilden.

Der Kondensator für die kleine Kapazität 3 und der weitere Kondensator für die weitere Kapazität 8 ist im Ausführungsbeispiel vorteilhaft am Busleiter 1 für positive Polarität angeschlossen. Der Busankoppler arbeitet wie folgt:

Die kleine Kapazität 3 lädt sich mit einer Zeitkonstanten C3 x R5 auf eine Spannung auf, die sich aus der Busspannung am Busleiter 1 durch Subtraktion der Spannung der Spannungsquelle 9 ergibt. Beispielsweise kann die Busspannung 24V betragen und die Spannung der Spannungsquelle 9 beispielsweise 8V. Über die Miller-Schaltung aus kleiner Kapazität 3 sowie Transistor 4 und Ansteuerwiderstand 5 in Verbindung mit den zwei Stromverstärkerschaltungen mit dem Transistor 6 bzw.7 steht am Emitter des Transistors 7 in Kurzzeitbetrachtung, d.h. zu Beginn des Aktivimpulses bezüglich der Zeitkonstanten eine niederohmige Verbindung zum Busleiter zur Verfügung. Diese weist einen festen Spannungsfall auf aus Busspannung, subtrahiert die Spannung der Spannungsquelle 9, von beispielsweise 8V, und weiter subtrahiert die Basis-Emitter-Spannung des Transistors. Der Emitter wird mit dem Sendeventil für die Dauer des Aktivimpulses gegen Masse gezogen, so daß der Bus unabhängig von der Busspannung Aktivimpulse immer gleichgroßer Amplitude von im Ausführungsbeispiel 8V minus Basis-Emitter-Spannung aufweist. Der Steuereingang 13 des Netzwerkes 11 speist für das Sendeventil 2 die erforderliche Spannung ein. Beim Bus der EIBA ist das ein HIGH-Impuls von 35 µs Länge.

Eine Ansteuerung am Steuereingang 13 für das Netzwerk 11 schaltet den Transistor 15 bis zu einer Zeit tl leitend, wodurch sich der weitere Kondensator 8 über die Widerstände 16 und 17 als Ladewiderstände auf die Busspannung minus dem Spannungsfall des Transistors 15 auflädt. Die Aufladezeitkonstante C8 x (R16+R17) ist so gewählt, daß der weitere Kondensator 8 am Ende von t1 voll aufgeladen ist. Am Ende von t1 wird an den Bus ein Ausgleichsimpuls abgegeben. Am Ende von t1 wird der Steuereingang 14 des Netzwerkes 12 angesteuert. Im Falle des Busses der EIBA ist das eine Zeitdauer von 52,5 µs. Vom Steuereingang 14 wird der Transistor 18 in den stromleitenden Zustand überführt, wodurch auch der Transistor 19 leitend gesteuert wird. Da am Ende von t1 der Transistor 15 in den nichtleitenden Zustand gesteuert wurde, wird der weitere Kondensator 8 mit seiner Ladung, die er während der Zeit tl erhalten hat, auf die Spannung an der Anwenderschnittstelle AST über den Widerstand 16 geschaltet. Die Spannung an der Anwenderschnittstelle kann beispielsweise 20V betragen. Dem Bus wird sonach eine Spannung im Ausgleichsimpuls von 20V - 8V = +12V, bezogen auf die Busspannung, zugeführt, die sich mit der Zeitkonstanten C8 x R16 während der Zeitdauer bis t2 durch Entladen des weiteren Kondensators 8 nach einer e-Funktion bis auf eine Spannung kleiner als 1V abbaut. Im Hinblick auf vorstehendes Beispiel ergibt Sich somit ein Ausgleichsimpuls mit einer absoluten Amplitude von 24V-8V+20V = 36V. Die im weiteren Kondensator 8 gespeicherte Energie entspricht bei richtiger Dimensionierung der sonst in einem üblichen Übertrager gespeicherten Energie, so daß der Busankoppler zu bisher eingesetzten Busankopplern mit Übertragern voll kompatibel ist.

Am Kondensator 20 kann Gleichspannung zur Bordnetzversorgung abgenommen werden, wobei die Ladeschaltung für den Kondensator der Übersichtlichkeit wegen weggelassen wurde. Diese Ladeschaltung ist für die Erzeugung der Sendeimpulse unerheblich.

Sämtliche hier erwähnten Transistoren können als Schalter der IC-Technologie verstanden werden. Die Kondensatoren bzw. Kapazitäten lassen sich in einem IC integrieren.

## Patentansprüche

1. Busankoppler zum übertragerfreien Senden auf einen Information, aus Aktivimpuls und Ausgleichsimpuls, und Energie führenden Bus der Gebäudesystemtechnik, insbesondere der European Installation Bus Association, EIBA,
**dadurch gekennzeichnet,**
daß das Sendeventil (2) eines Sendesignalgebers der Wirkung nach über eine Kapazität (3), die bezüglich einer gedachten Kapazität, die für die Aktivimpulse der Information als Kurzschluß wirkt, klein ist, an zumindest einem Busleiter (1) angeschlossen ist, wobei in einer Miller-Schaltung, welche im wesentlichen aus einem Transistor (4), einem Ansteuerwiderstand (5) und zwei Stromverstärkerschaltungen (6;7) besteht, diese kleine Kapazität in eine ausreichende Kapazität transformiert wird, um Aktivimpulse ausreichend verlustfrei zu übertragen, und wobei eine Energiespeicherung zur Generierung des Ausgleichsimpulses in einer weiteren Kapazität (8) erfolgt.

2. Busankoppler nach Anspruch 1,
**dadurch gekennzeichnet,**
daß ein Kondensator für die kleine Kapazität (3) mit einem Pol an einem Busleiter (1) eines zweiadrigen Busses angeschlossen ist und mit seinem anderen Pol über einen hochohmigen Ansteuerwiderstand (5) an eine Spannungsquelle (9), wobei die Spannungsquelle (9) so gewählt ist, daß ihre Spannung die gewünschte Spannung für den Aktivimpuls erzeugt.

3. Busankoppler nach Anspruch 1 oder 2,
**dadurch gekennzeichnet,**
daß die Miller-Schaltung (3,4,5) über das Sendeventil (2) des Sendesignalgebers gegen Masse (10) geschaltet ist.

4. Busankoppler nach Anspruch 1 und Anspruch 2 oder 3,
**dadurch gekennzeichnet,**
daß ein weiterer Kondensator für die weitere Kapazität (8) zur Generierung des Ausgleichsimpulses mit seinem einen Pol an einen Busleiter (1) und mit seinem anderen Pol über zumindest einen Widerstand (16,21) an einer weiteren Spannungsquelle (20) für die Bordnetzversorgung angeschlossen ist, wobei Ladung und Entladung des weiteren Kondensators über der Impulsform der Information entsprechend angesteuerte Netzwerke (11,12) mit entsprechenden Zeitkonstanten gesteuert sind.

5. Busankoppler nach Anspruch 4,
**dadurch gekennzeichnet,**
daß der Kondensator für die kleine Kapazität (3) und der weitere Kondensator für die Kapazität (8) am Busleiter positiver Polarität angeschlossen sind.

## Claims

1. Bus coupler for transformer-free transmission onto a bus appertaining to building system technology, in particular the European Installation Bus Association, EIBA, said bus carrying information, comprising active pulse and equalizing pulse, and energy,
characterized
in that the transmission valve (2) of a transmission signal generator, in accordance with the function, is connected to at least one bus conductor (1) via a capacitance (3), which is small relative to an imaginary capacitance acting as a short circuit for the active pulses of the information, it being the case that in a Miller circuit, which essentially comprises a transistor (4), a drive resistor (5) and two current amplifier circuits (6; 7), this small capacitance is transformed into a sufficient capacitance in order to transmit active pulses in a sufficiently loss-free manner, and energy storage for the purpose of generating the equalizing pulse being effected in a further capacitance (8).

2. Bus coupler according to Claim 1,
characterized
in that a capacitor for the small capacitance (3) is connected by one pole to a bus conductor (1) of a two-core bus and by its other pole to a voltage source (9) via a high-value drive resistor (5), the voltage source (9) being chosen such that its voltage generates the desired voltage for the active pulse.

3. Bus coupler according to Claim 1 or 2,
characterized
in that the Miller circuit (3, 4, 5) is connected to earth (10) via the transmission valve (2) of the transmission signal generator.

4. Bus coupler according to Claim 1 and Claim 2 or 3,
characterized
in that a further capacitor for the further capacitance (8) for generating the equalizing pulse is connected by one of its poles to a bus conductor (1) and by its other pole, via at least one resistor (16, 21), to a further voltage source (20) for on-board electrical supply, charging and discharging of the further capacitor being controlled by means of networks (11, 12), which are driven in accordance with the pulse shape of the information, with corresponding time constants.

5. Bus coupler according to Claim 4,
characterized
in that the capacitor for the small capacitance (3) and the further capacitor for the capacitance (8) are connected to the bus conductor of positive polarity.

## Revendications

1. Coupleur de bus pour l'émission sans transformateur sur un bus utilisé pour des systèmes installés dans des bâtiments et conduisant de l'information, composée d'impulsions actives et d'impulsions d'égalisation, et de l'énergie, notamment selon la European Installation Bus Association EIBA,
caractérisé par le fait que, quant à son action, la vanne d'émission (2) d'un transmetteur de signal d'émission est raccordée à au moins un fil de bus (1) par l'intermédiaire d'une capacité (3) qui est petite par rapport à une capacité imaginaire agissant comme court-circuit pour les impulsions actives de l'information, cette petite capacité étant transformée, dans un circuit de Miller constitué essentiellement d'un transistor (4), d'une résistance de commande (5) et de deux circuits amplificateurs de courant (6 ; 7), en une capacité suffisante pour transmettre avec assez peu de perte des impulsions actives et une accumulation d'énergie pour la production de l'impulsion d'égalisation s'effectuant dans une autre capacité (8).

2. Coupleur de bus selon la revendication 1,
caractérisé par le fait qu'un condensateur pour la petite capacité (3) est raccordé par un pôle à un fil de bus (1) d'un bus à deux fils et par son autre pôle à une source de tension (9) par l'intermédiaire d'une résistance de commande (5) de grande valeur ohmique, la source de tension (9) étant choisie de telle sorte que sa tension produit la tension souhaitée pour l'impulsion active.

3. Coupleur de bus, selon la revendication 1 ou 2,
caractérisé par le fait que le circuit de Miller (3, 4, 5) est branché à la masse (10) par l'intermédiaire de la vanne d'émission (2) du transmetteur de signal d'émission.

4. Coupleur de bus selon la revendication 1 et la revendication 2 ou 3,
caractérisé par le fait qu'un autre condensateur pour l'autre capacité (8) destinée à la production de l'impulsion d'égalisation est raccordé par un pôle à un fil de bus (1) et par son autre pôle par l'intermédiaire d'au moins une résistance (16, 21) à une autre source de tension (20) pour l'alimentation de réseau de bord, la charge et la décharge de l'autre condensateur étant commandées par l'intermédiaire de réseaux (11, 12) commandés selon la forme d'impulsion de l'information et avec des constantes de temps correspondantes.

5. Coupleur de bus selon la revendication 4,
caractérisé par le fait que le condensateur pour la petite capacité (3) et l'autre condensateur pour la capacité (8) sont raccordés au fil de bus de polarité positive.
